# EUROPEAN PATENT SPECIFICATION

(11) **EP 0 535 539 B1**
(45) Date of publication and mention of the grant of the patent: **19.11.1997**
(21) Application number: 92116387.9
(22) Date of filing: 24.09.1992
(51) Int. Cl.: G06F 13/40

(54) **CPU-exchangeable computer system**
Rechnersystem mit austauschbarer CPU
Système d'ordinateur avec CPU interchangeable

(30) Priority: 30.09.1991 JP 250662/91; 30.09.1991 JP 252581/91; 10.01.1992 JP 3369/92
(43) Date of publication of application: 07.04.1993
(73) Proprietor: KABUSHIKI KAISHA TOSHIBA, Kawasaki-shi, Kanagawa-ken 210 (JP)
(72) Inventor: Yamaki, Kazunori, c/o Intellectual Property Div., Minato-ku, Tokyo 105 (JP); Nasu, Takahiro, c/o Intellectual Property Div., Minato-ku, Tokyo 105 (JP)
(74) Representative: Henkel, Feiler, Hänzel & Partner

(56) References cited:
- EP-A- 0 411 806
- EP-A- 0 472 274
- IBM TECHNICAL DISCLOSURE BULLETIN. vol. 33, no. 3B, August 1990, NEW YORK US pages 112 - 113 '32-BIT MEMORY SUBSYSTEM SUPPORTS INTEL 80386 AND 80386SX PROCESSORS'
- IBM TECHNICAL DISCLOSURE BULLETIN. vol. 32, no. 4A, September 1989, NEW YORK US page 467 'INTEL 80386 OR intel P9 DETECTION'

## Description

This invention relates to a CPU-exchangeable type computer system capable of attaining an additional function by exchanging different types of CPUs having different functions without changing the whole system.

Conventionally, in a computer system such as a portable computer, the function of the CPU (central processing unit) is determined by the specification of the mounted microprocessor (MPU). Therefore, in order to attain an additional function other than the function of the mounted CPU, it is necessary to mount an additional circuit having an optional specification.

More specifically, when a microprocessor (Type: i80486SX) of INTEL Co. (U.S.A.) is used as the CPU of the system, for example, and it is required to add the function of FPU (Floating Point Unit), a circuit of Type i80487SX of FPU of INTEL Co. may be additionally mounted, for example. The FPU is a circuit for effecting the function for supporting the numerical operation control of the CPU.

However, when the respective circuits of the above MPU and FPU are mounted on the system, a mounting space which is substantially twice that required for forming the CPU must be provided for forming only the MPU since the LSI package sizes of the respective circuits are substantially the same. This is an obstacle to miniaturization of the system. Since the circuits of the MPU and FPU consume driving currents, the current consumption of the CPU of the system becomes equal to the total sum of the respective current consumptions when an application software for fully utilizing the FPU is executed. More specifically, the maximum value of the current consumption of the MPU of Type i80486SX is 600 mA when the MPU is operated at a frequency of 200 MHz and the maximum value of the current consumption of the FPU of Type i80487SX is 800 mA when the FPU is operated at a frequency of 200 MHz.

In order to solve the above problems, it is considered to exchange a normal MPU with an MPU having the additional function of FPU. More specifically, an MPU of Type i80486DX of INTEL Co. having an FPU contained therein is mounted instead of the MPU of Type i80486SX, for example. In this system, since the CPU is constructed only by the MPU of Type i80486DX, it is not necessary to provide a large mounting space. Further, since the maximun value of the current consumption of Type i80486DX is 900 mA, the current consumption of the CPU of the system can be significantly reduced in comparison with a case wherein the circuits of the MPU and FPU are used.

However, a system in which different types of MPUs are exchanged has several problems. First, the arrangement of input/output pins for various control signals necessary for operation of the MPU may be different even between MPUs of the same series. Secondly, the frequency of the synchronization clock pulse necessary for operations of the MPUs may be different. Thirdly, the timings of various control signals of the peripheral circuit such as a memory other than the CPU must be changed according to the clock pulse frequency of the MPU. That is, when different types of MPUs are exchanged, various control signals must be changed according to the specification of the MPU to be used.

A computer system of the aforementioned specification is disclosed in EP-A-0 411 806. In order to upgrade a computer certain essential chips present in the original computer system are functionally, but not necessarily physically, removed from the computer system. Functions which would otherwise be performed by the original chips are instead performed by higher-performance chips on a plug-in module which is plugged into the computer system. The functional removal of the certain chips from the original computer system is achieved through simple insertion of the plug-in module. Original chips or boards are not replaced or substituted.

A data processing apparatus having connectors to receive system components is disclosed by EP-A-0 472 274 published on February 26, 1992. Thereby a planar board is provided with a bus means for interconnecting components of a data processing system adapted to operate with a central processing unit (CPU) of one type. A socket provided on the board is adapted to receive said one CPU and is also adapted to receive a CPU of a second type (and its special adapter) having one CPU. Bus modification means on the adapter and logic provided on the board (which response to said bus modification means) permit the interconnected components of the data processing system to operate with the second CPU.

The object of this invention is to provide a CPU-exchangeable type computer system capable of attaining the additional function of FPU or the like without increasing the mounting space and current consumption of a CPU by exchanging the CPU with a different type MPU and mounting the same on the system.

In order to attain the above object, a computer system of this invention is constructed as set out in claim 1. Further favourable embodiments are defined by the subclaims.

This invention can be more fully understood from the following detailed description when taken in conjunction with the accompanying drawings, in which:
Fig. 1 is a block diagram showing the main portion of a computer system according to a first embodiment of this invention;
Fig. 2 is a block diagram showing the internal construction of an MPU according to the first embodiment of this invention;
Fig. 3 is a diagram for illustrating the arrangement of input/output pins between different types of MPUs according to the first embodiment of this invention;
Fig. 4 is a flowchart for illustrating the operation of the first embodiment;
Fig. 5 is a block diagram showing the construction of a portable computer system to which this invention is applied;
Figs. 6 to 8 are perspective views showing the external construction of the portable computer to which this invention is applied;
Fig. 9 is a block diagram showing part of a computer system according to a second embodiment of this invention;
Fig. 10A is a plan view showing the computer system according to the second embodiment of this invention;
Fig. 10B is a side view showing the computer system according to the second embodiment of this invention; and
Fig. 11 is a block diagram showing part of a computer system according to a third embodiment of this invention.

There will now be described a first embodiment of this invention with reference to the accompanying drawings.

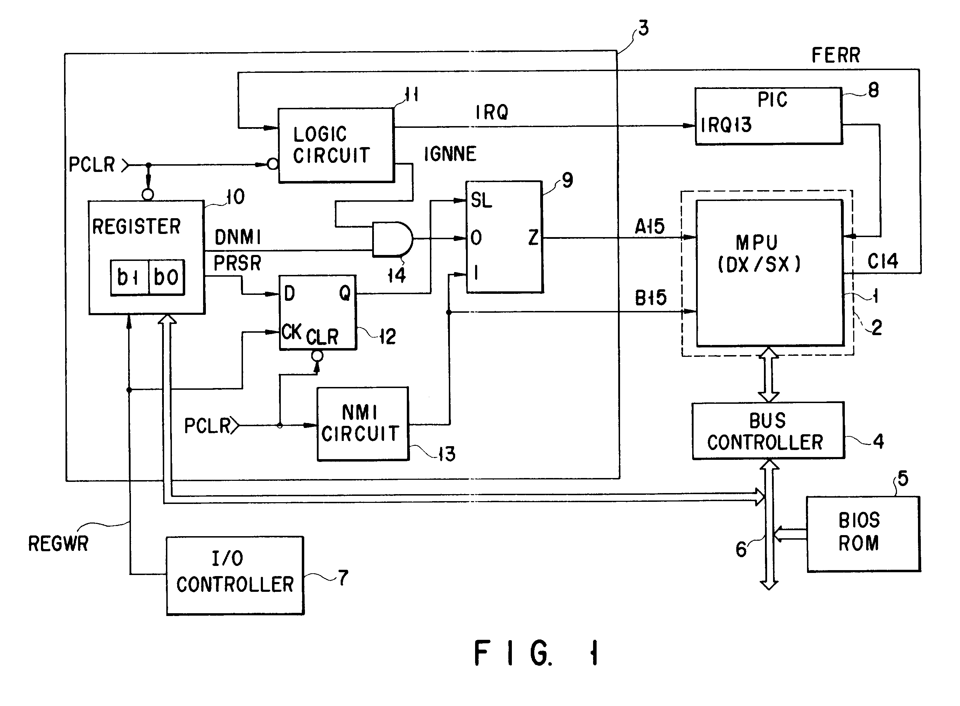

As shown in Fig. 1, the main portion of a computer system of this invention includes a microprocessor (MPU) 1 which constitutes a CPU of the system and is removably mounted on a CPU socket 2, a signal switching circuit 3, a bus controller 4 for effecting the bus control, a BIOS ROM 5 for effecting the input/output control with respect to the system and a system bus 6 used for connection between the CPU and peripheral units.

The CPU socket 2 is mounted on a system board which is provided in the main body of the system and is connected to power source lines and buses for connecting various elements constituting the system. In this embodiment, it is considered that the MPU 1 is formed of an MPU(SX) of Type i80486SX of INTEL Co. and an MPU(DX) of Type i80486DX having an FPU of INTEL Co. contained therein, for example. The BIOS ROM 5 is a read only memory (ROM) storing a basic input and output system (BIOS) containing an initialization routine for executing the initialization process of the system at the starting time of the system.

The signal switching circuit 3 includes a selector 9, register 10, logic circuit 11, latch circuit 12, NMI circuit 13 and AND gate 14. When the MPU(DX) 1 is used as the CPU, the logic circuit 11 is supplied with an FPU error signal (negative logic FERR) from the MPU(DX) 1 and outputs an interrupt signal IRQ or signal IGNNE (negative logic). The logic circuit 11 is a circuit for realizing the DOS compatible function so as to use the FPU error signal (FERR) commonly with the computer of Industry Standard Architecture (ISA) system, for example. The logic circuit 11 outputs the interrupt signal to a programmable interrupt controller (PIC) 8 used in the ISA system. The PIC 8 is a circuit which accepts the interrupt by the FPU error in response to an input of the interrupt signal IRQ.

The AND gate 14 receives a signal IGNNE from the logic circuit 11 at the first input terminal and receives a signal DNMI from the register 10 at the second input terminal. The signal IGNNE is used to neglect the FPU error signal (FERR). The signal DNMI indicates first bit data (b0) of 2-bit control data (b1, b0) of the register 10. The AND gate 14 transfers an output signal to the data input terminal (0) of the selector 9.

In the register 10, 2-bit control data is stored according to the result of determination of the MPU 1 connected to the CPU socket 2, and in this example, 2-bit control data of (b1=0, b0=1) is stored when the MPU(DX) is used and 2-bit control data of (b1=1, b0=1) is stored when the MPU(SX) is used. The register 10 outputs a signal DNMI corresponding to the first bit data (b0) and a signal PRSR corresponding to the second bit data (b1) according to the 2-bit control data. The signal DNMI is a signal for preventing the NMI signal from being erroneously asserted until the operation of switching the input/output pins (signal switching operation) is completed when the MPU(SX) is mounted. The signal PRSR is a switching signal for selecting one of the signal IGNNE and the NMI signal as the input signal to the input pin A15 of the MPU 1.

The latch circuit 12 is a D-type flip-flop for latching the signal PRSR output from the register 10. The latch circuit 12 is supplied with a power-on clear signal PCLR at the clear terminal CLR and write strobe signal REGWR at the clock terminal CK. The latch circuit 12 supplies an output signal Q to the select terminal SL of the selector 9.

The NMI circuit 13 is a circuit for generating a non-maskable interrupt (NMI) signal at the time of occurrence of memory error or I/O error. The selector 9 outputs a signal input to the data input terminal (0) from the output terminal Z when the signal Q of the logic level "L" is input to the select terminal SL thereof. Further, the selector 9 outputs a signal input to the data input terminal (1) from the output terminal Z when the signal Q of the logic level "H" is input to the select terminal SL thereof.

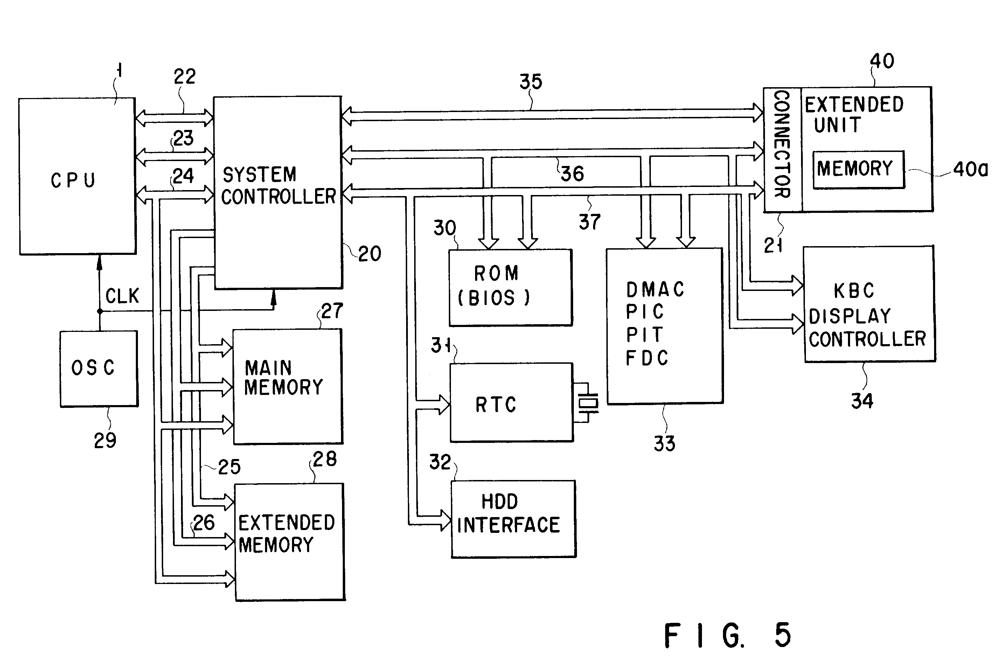

Fig. 5 is a block diagram showing the construction of a portable computer to which the computer system of this invention is applied. The portable computer is mainly constructed by an MPU 1 constituting the CPU, system controller 20 and various units.

The system controller 20 is an LSI constituting the interface between a 32-bit MPU 1 and various units of 16-bit series. The system controller 20 has functions of the signal switching circuit 3, memory controller, bus controller 4 and input/output (I/O) controller 7 associated with this invention.

The system controller 20 is connected to the MPU 1 via a control bus 22, 32-bit address bus 23 and 32-bit data bus 24. Further, the system controller 20 is connected to a main memory 27 and an extended memory 28 via a memory control bus 25 and a memory address bus 26. The main memory 27 and extended memory 28 constitute a system memory.

The control bus 22 is used to transfer various control signals such as a memory/input-output (M/IO) signal, write/read (W/R) signal, data/control (D/C) signal and address status (ADS) signal output from the MPU 1 and a ready (RDY) signal output from the memory controller of the system controller 20.

The memory control bus 25 transfers memory control signals such as a row address strobe (RAS) signal and a column address strobe (CAS) signal output from the memory controller 4.

The system controller 20 and MPU 1 are supplied with a clock pulse CLK necessary for the operation thereof from a clock generator circuit (OSC) 29.

Various units include a read only memory (ROM) 30, real time controller (RTC) 31, and hard disk drive (HDD) interface 32. Further, a unit 33 including DMAC, PIC, PIT and FDC and a unit 34 including KBC and display controller are provided. DMAC is a direct memory access controller, PIC is a programmable interrupt controller, PIT is a programmable interval timer, FDC is a floppy disk controller, and KBC is a keyboard controller. The ROM 30 is a BIOS-ROM having a BIOS previously stored therein.

The system controller 20 is connected to the various units 30 to 34 via a control bus 35, address bus 36 and data bus 37. Further, for example, the system controller 20 is connected to an extended unit 40 having an extended memory 40a provided therein via a connector 21 exclusively used for the extended unit. The system controller 20 transfers data, address and various control signals via the control bus 35, address bus 36 and data bus 37 with respect to an extended memory 40a mounted on an extended unit 40.

Next, the operation of the first embodiment is explained.

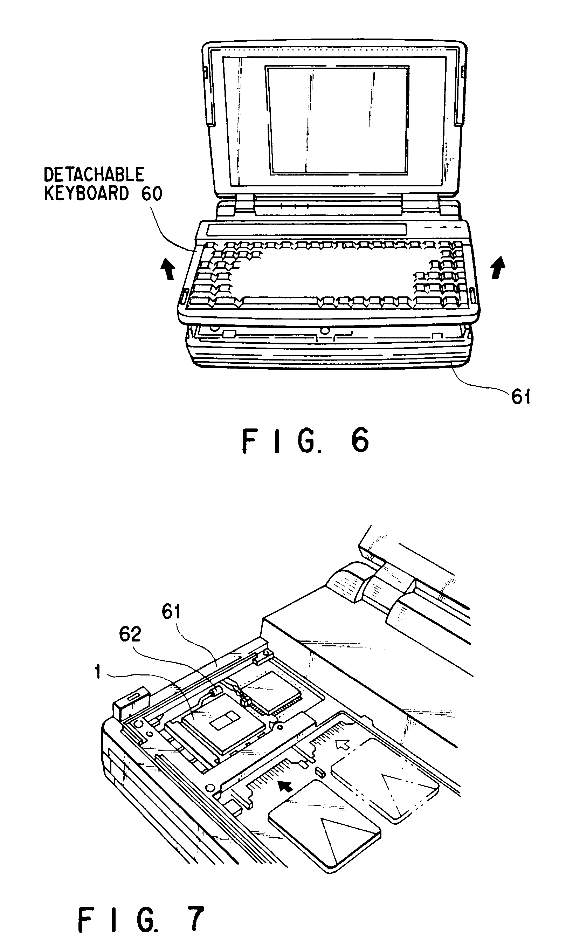

The system of this invention is a lap-top type portable computer as shown in Fig. 6, for example, and is applied to a computer having a keyboard 60 which can be removably mounted on a main body 61. The main body 61 contains a system board having various elements such as MPU 1 mounted thereon in a casing provided under the keyboard 60. The CPU socket 2 is mounted on the system board. The MPU 1 which is an MPU(DX) or MPU(SX) is set on the CPU socket 2.

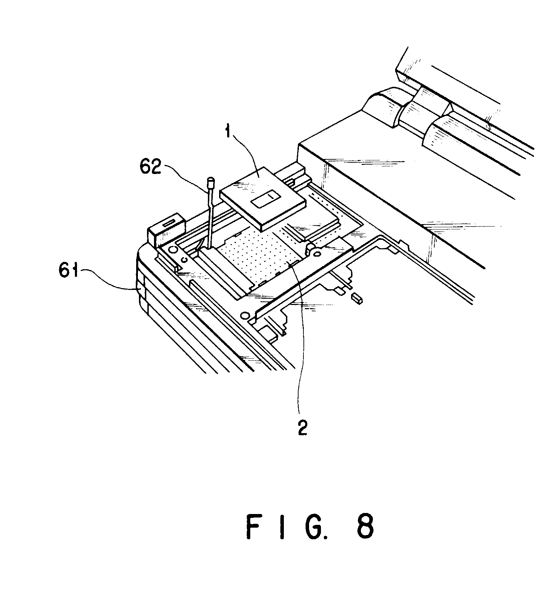

A lever 62 is attached to the CPU socket 2 and the MPU 1 set on the CPU socket 2 can be removed by operating the lever as shown in Fig. 8. That is, the MPU(DX) and MPU(SX) can be exchangeably mounted by use of the CPU socket 2 which permits one of them to be selectively and removably mounted thereon.

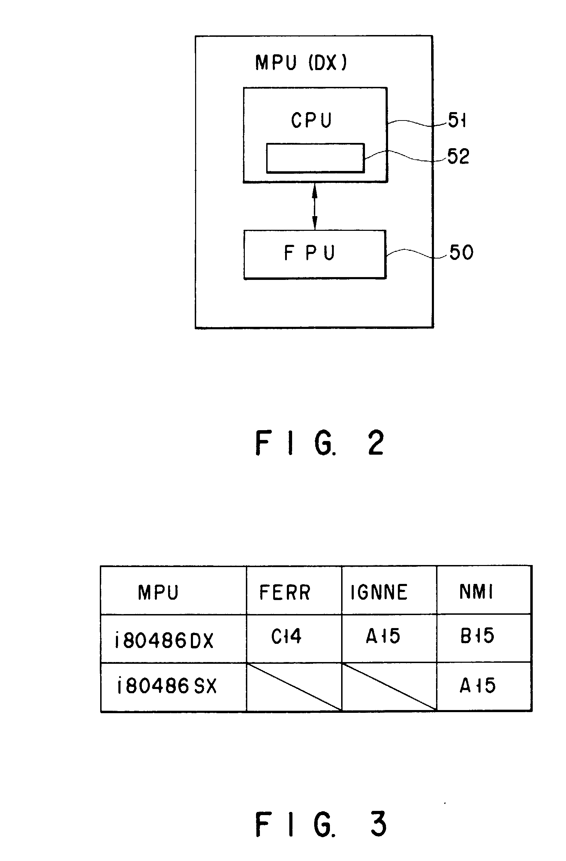

When an MPU(DX) or MPU(SX) is mounted as the MPU 1 on the CPU socket 2, the construction of the input/output pins A15, B15 and C14 becomes different. That is, as shown in Fig. 3, when the MPU(SX) is used, only the input pin A15 for receiving an NMI signal is used and the other input/output pins B15 and C14 are simply provided as dead terminals. On the other hand, when the MPU(DX) is used, the input pin A15 for receiving an IGNNE signal, the input pin B15 for receiving an NMI signal and the output pin C14 for outputting a FPU error signal (FEPR) are all used.

Assuming that an MPU(SX) is used as the standard MPU and the CPU of the system is constructed by the MPU(SX). Then, an NMI signal is input to the input pin A15. When the MPU(SX) is exchanged for an MPU(DX) containing an FPU, it is necessary to effect the signal switching operation so as to permit a signal IGNNE and an NMI signal to be respectively input to the input pins A15 and B15. At this time, the NMI signal becomes a significant signal when it is set at the logic level "H" and the signal IGNNE becomes a significant signal when it is set at the logic level "L". Therefore, the input pin A15 is supplied with a signal having an opposite polarity when the MPUs are exchanged so that the polarity of an input signal must be fixed until the signal switching operation is effected in order to prevent occurrence of the erroneous operation.

When the type of the MPU 1 mounted on the CPU socket 2 is determined to be an MPU(SX) type or MPU(DX) type, the signal switching circuit 3 effects the signal switching operation to permit an adequate signal to be input to the MPU(SX) or MPU(DX) as described before based on the result of determination.

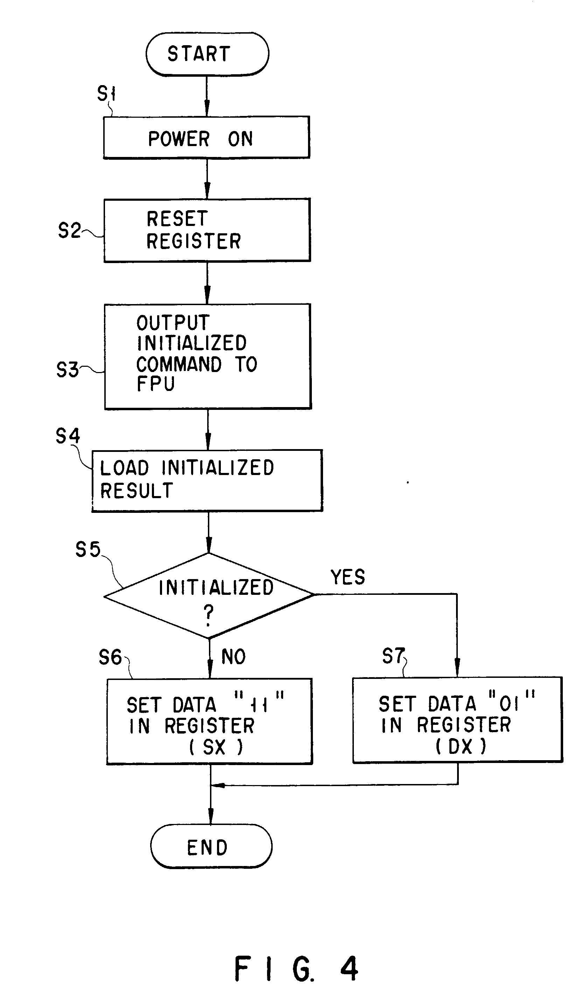

Next, the process of determining the type of the MPU 1 and the operation of the signal switching circuit 3 are described with reference to Figs. 1 and 4. First, as shown in the step S1 of Fig. 4, a power-on clear signal PCLR is output from a power source controller (not shown) to reset the logic circuit 11 and latch circuit 12 when the power source switch of the system is turned on. Also, the register 10 is reset by the power-on clear signal (step S2).

When reset, the logic circuit 11 outputs a signal IGNNE at the logic level "H" and the register 10 outputs a signal DNMI (b0) and signal PRSR (b1) which are both at the logic level "L". The NMI circuit 13 is cleared by the power-on clear signal PCLR and outputs a signal of logic level "L".

As a result, since the output signal Q of the latch circuit 12, output signal of the AND gate 14 and output signal of the NMI circuit 13 are all set at the logic level "L", the selector 9 selects an input signal of logic level "L" input to the input terminal (0) thereof and outputs the same from the output terminal Z to the input terminal A15 of the MPU 1. In this state, if an MPU(DX) is mounted as the MPU 1, the signal IGNNE of logic level "L" will be asserted (refer to Fig. 3), but no problem will occur unless an FPU error (signal FERR of logic level "L") occurs. On the other hand, when an MPU(SX) is mounted as the MPU 1, no problem occurs since the NMI signal will not be asserted by the input signal of logic level "L".

Next, when the power-on clear signal PCLR becomes inactive, the BIOS starts the initialization routine and effects the process of determining the type of the MPU 1. In this determination process, whether the MPU 1 contains an FPU or not is determined. That is, if an FPU is contained, the MPU 1 is determined to be an MPU(DX), and if not, the MPU 1 is determined to be an MPU(SX).

At this time, the MPU(DX) effects the initialization process for an FPU which is contained therein in response to the initialization process of the BIOS as shown in Fig. 2. More specifically, a CPU 51 of the MPU(DX) outputs an initialized command (FINIT command) and FSTCW (store control word) and sets initialization data (result of initialization) obtained as the result of the initialization process of the FPU 50 into an internal register 50 (steps S3 and S4).

The BIOS determines that the MPU(DX) is mounted on the CPU socket 2 ("YES" in the step S5) when it is detected based on the initialization data set in the internal register 52 that the initialization process of the FPU 50 is correctly effected. After this, the BIOS sets 2-bit control data (b1=0, b0=1) indicating determination of the MPU(DX) into the register 10 (step S7).

On the other hand, when initialization data is not supplied from the MPU 1, the BIOS determines that an MPU(SX) is mounted on the CPU socket 2 ("NO" in the step S5). At this time, the BIOS sets 2-bit control data (b1=1, b0=1) indicating determination of the MPU(SX) into the register 10 (step S6).

It is also possible to use a determination method for determining that the MPU is an MPU(DX) or MPU(SX) by previously setting identification data into the internal register 52 of the MPU(DX) and determining whether the identification data is present or not.

After the determination process, the control data (b1=0, b0=1) or (b1=1, b0=1) corresponding to the result of determination is set into the register 10 of the signal switching circuit 3. The control data is written into the register 10 in synchronism with a write strobe signal REGWR output from the I/O controller 7 of the system.

When the MPU(DX) is mounted, the signal PRSR (b1) is kept at the logic level "L" according to the control data of the register 10 in the signal switching circuit 3, but the signal DNMI (b0) is changed to the logic level "H". The selector 9 selects an output signal of the AND gate 14 input to the input terminal (0) and supplies the signal IGNNE of logic level "H" output from the AND gate 14 to the input pin A15 of the MPU(DX).

At this time, the MPU(DX) receives the NMI signal from the NMI circuit 13 at the input pin B15 and outputs an FPU error signal (signal FERR of logic level "L") from the output pin C14. When the FPU error signal is output from the output pin C14 of the MPU(DX), the logic circuit 11 changes the signal IGNNE to the logic level "L". As a result, the MPU(DX) is supplied with the signal IGNNE of logic level "L" from the selector 9 and is set into the asserted state.

On the other hand, when the MPU(SX) is mounted, the signal PRSR (b1) and signal DNMI (b0) are both changed to the logic level "H" according to the control data of the register 10. Therefore, the latch circuit 12 latches the signal PRSR (b1) and outputs a signal Q of logic level "H". The selector 9 selects the NMI signal from the NMI circuit 13 input to the input terminal (1) and outputs the same to the input pin A15 of the MPU(SX). The MPU(SX) does not use the input pin B15 and output pin C14.

A CPU of the system having the function of the FPU can be easily attained by exchanging the normal MPU(SX) for the MPU(DX) containing the FPU as required. In this case, since one of different types of MPUs such as the MPU(SX) and MPU(DX) is selectively mounted, the size of the mounting space for the CPU is sufficient if the mounting space for a single MPU is provided, and therefore, an increase in the mounting space for the CPU will not be increased. The current consumption of the MPU(DX) is slightly larger than that of the MPU(SX), but use of the MPU(DX) will not cause the current consumption to be increased to such a value which is substantially twice that of the conventional case.

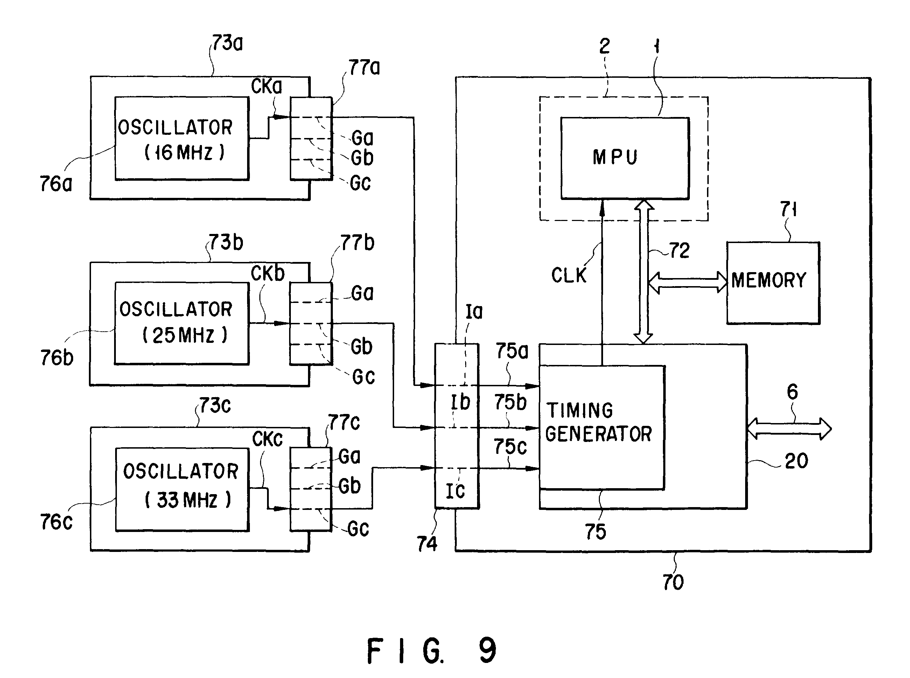

Fig. 9 is a block diagram showing part of a computer system according to a second embodiment of this invention.

In the CPU exchangeable type computer system of this invention, when an MPU 1 constituting the CPU is exchanged, a different type of MPU using an operating clock pulse of different frequency may be used. The second embodiment is a circuit for creating a clock pulse of adequate frequency according to the type of the mounted MPU and supplies the thus created clock pulse to the CPU.

In the computer to which this invention is applied as shown in Fig. 5, various constituent elements such as an MPU 1 constituting the CPU of the system, system controller 20, system bus 6 and internal memory 71 are mounted on a system board 70 contained in the main body of the computer as shown in Fig. 9.

The MPU 1 is removably mounted on a CPU socket 2 attached to the system board 70. The MPU 1 is connected to the system controller 20 via the CPU socket 2 by means of an internal bus 72. The internal bus 72 includes a control bus 22, address bus 23 and data bus 24 as shown in Fig. 5.

An input connector 74 connected to a plurality of oscillator boards 73a to 73c and used for inputting a clock pulse is provided on the system board 70. The input connector 74 is connected to input terminals 75a to 75c of a timing generator 75 of the system controller 20. The timing generator 75 creates an operation clock pulse CLK and various timing signals required for the operation of the MPU 1 according to the frequency of the clock pulse input via the input connector 74.

The oscillator boards 73a to 73c are disposed near the system board 70 of the main body of the computer and respectively have connectors 77a to 77c for connection with the input connector 74. The connectors 77a to 77c are formed with the same construction and each include a plurality of output terminals Ga to Gc.

An oscillator 76a for generating a clock signal CKa having a frequency of 16 MHz is mounted on the oscillator board 73a. The oscillator 76a is connected to the output terminal Ga of the connector 77a to transfer the clock pulse CKa to an input terminal Ia of the input connector 74. An oscillator 76b for generating a clock signal CKb having a frequency of 25 MHz is mounted on the oscillator board 73b. The oscillator 76b is connected to the output terminal Gb of the connector 77b to transfer the clock pulse CKb to an input terminal Ib of the input connector 74. Further, an oscillator 76c for generating a clock signal CKc having a frequency of 33 MHz is mounted on the oscillator board 73c. The oscillator 76c is connected to the output terminal Gc of the connector 77c to transfer the clock pulse CKc to an input terminal Ic of the input connector 74.

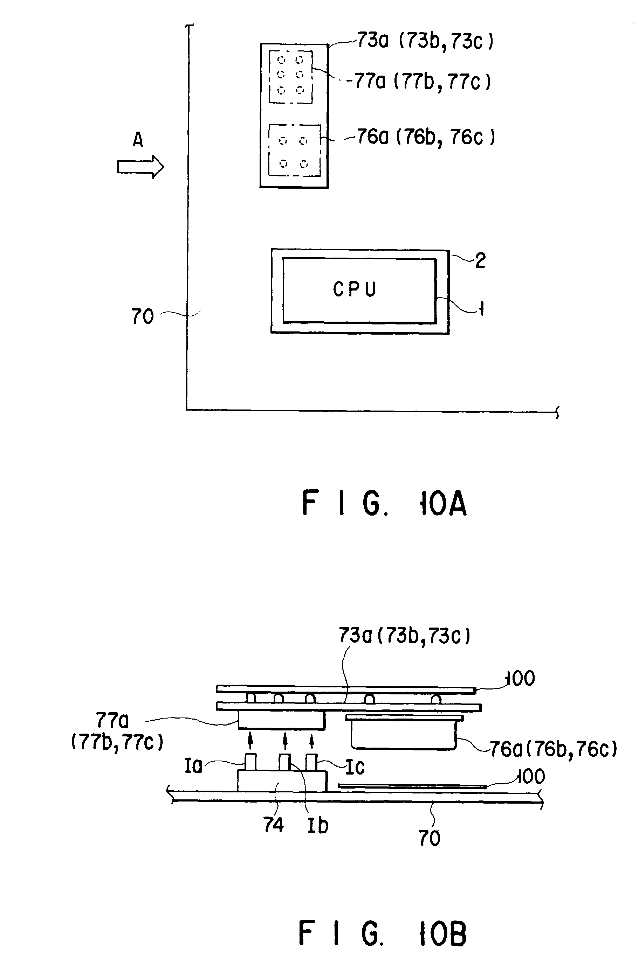

The system board 70 and the oscillator boards 73a to 73c are arranged in such positions as shown in Figs. 10A and 10B. Fig. 10A is a plan view and Fig. 10B is a side view when observed in a direction indicated by an arrow A. In this case, the oscillation boards 73a to 73c are attached to the main body of the computer with an insulation sheet 10 disposed therebetween. When the input connector 74 and the connectors 77a to 77c are connected together, the oscillators 76a to 76c are fixed on the surface of the system board 70 by means of the insulation sheet 100.

Next, the operation of the second embodiment is explained.

First, in a case where the MPU 1 operated by the clock pulse CLK having a frequency of 16 MHz is mounted on the CPU socket 2, the oscillator board 73a is mounted to connect the connector 77a to the input connector 74. As a result, a clock pulse CKa of 16 MHz generated from the oscillator 76a of the oscillator board 73a is supplied to the input terminal Ia of the input connector 74 via the output terminal Ga of the connector 77a.

The timing generator 75 creates a clock pulse CLK of 16 MHz and various timing signals required for the operation of the MPU 1 based on the clock pulse CKa input to the input terminal 75a via the input terminal Ia of the input connector 74.

In this case, the output terminals Gb and Gc other than the output terminal Ga of the connector 77a of the oscillator board 73a are grounded. Therefore, the input connector 74 and the connector 77a are connected to each other to set the input terminals Ib and Ic other than the input terminal Ia of the input connector 74 into the grounded state.

Further, in a case where the MPU 1 operated by the clock pulse CLK having a frequency of 25 MHz is mounted on the CPU socket 2 of the system board 70, the oscillator board 73b is mounted to connect the connector 77b and the input connector 74 to each other. As a result, a clock pulse CKb of 25 MHz generated from the oscillator 76b of the oscillator board 73b is supplied to the input terminal Ib of the input connector 74 via the output terminal Gb of the connector 77b.

The timing generator 75 creates a clock pulse CLK of 25 MHz and various timing signals required for the operation of the MPU 1 based on the clock pulse CKb input to the input terminal 75b via the input terminal Ib of the input connector 74.

In this case, the output terminals Ga and Gc other than the output terminal Gb of the connector 77b of the oscillator board 73b are grounded. Therefore, the input connector 74 and the connector 77b are connected to each other to set the input terminals Ia and Ic other than the input terminal Ib of the input connector 74 into the grounded state.

Likewise, in a case where the MPU 1 operated by the clock pulse CLK having a frequency of 33 MHz is mounted on the CPU socket 2, the oscillator board 73c is mounted to connect the connector 77c to the input connector 74. As a result, a clock pulse CKc of 33 MHz generated from the oscillator 76c of the oscillator board 73c is supplied to the input terminal Ic of the input connector 74 via the output terminal Gc of the connector 77c.

The timing generator 75 creates a clock pulse CLK of 33 MHz and various timing signals required for the operation of the MPU 1 based on the clock pulse CKc input to the input terminal 75c via the input terminal Ic of the input connector 74.

In this case, the output terminals Ga and Gb other than the output terminal Gc of the connector 77c of the oscillator board 73c are grounded. Therefore, the input connector 74 and the connector 77c are connected to each other to set the input terminals Ia and Ib other than the input terminal Ic of the input connector 74 into the grounded state.

Thus, when the normal MPU is exchanged for an MPU having the additional function of FPU, for example, in the CPU-exchangeable type system, a clock pulse having a frequency required for the operation of the mounted MPU can be supplied. At this time, it is only necessary to provide the oscillator boards 73a to 73c corresponding to the frequencies, and as a result, MPUs having the operation clock pulses of different frequencies can be easily exchanged.

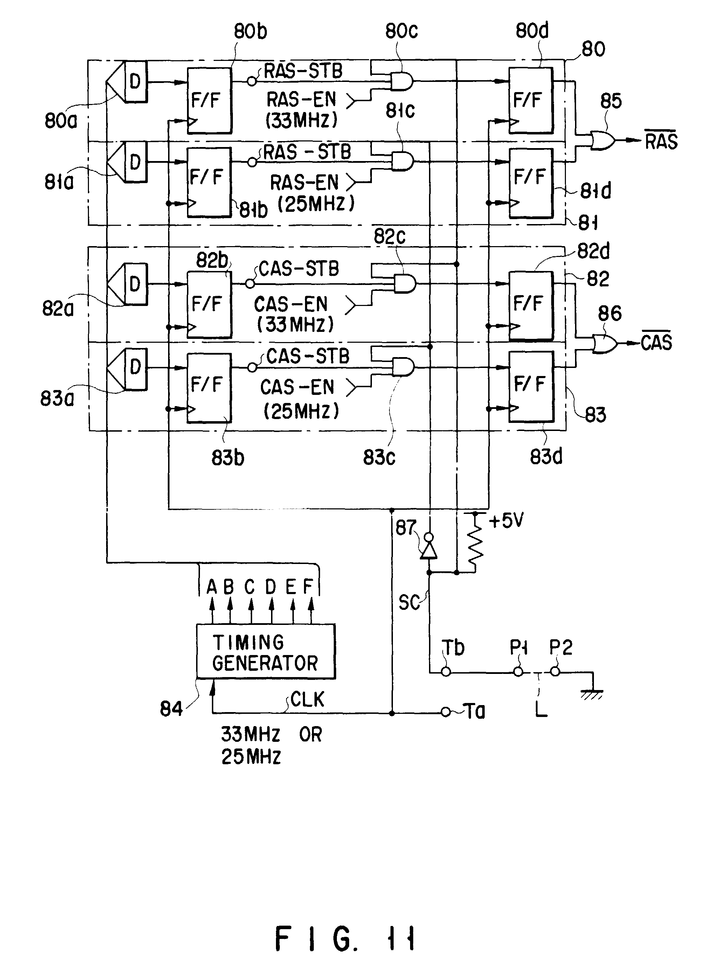

Fig. 11 is a block diagram showing part of a computer system according to a third embodiment of this invention.

When the MPU 1 constituting the CPU is exchanged, a clock pulse CLK having a frequency required for the operation of the mounted MPU can be supplied by use of the circuit of the second embodiment. The third embodiment is a memory controller for creating memory control signals RAS and CAS which are synchronous with the clock pulse CLK based on the clock pulse of the MPU.

As shown in Fig. 5, the memory controller is a circuit contained in the system controller 20 and is used to control a system memory constructed by a main memory 27 and an extended memory 28.

As shown in Fig. 11, the memory controller of this embodiment has two input terminals Ta and Tb. As shown in Fig. 9, a clock pulse CLK supplied from a timing generator 75, for example, a clock pulse CLK having a frequency of 25 MHz or a clock pulse CLK having a frequency of 33 MHz is input to the input terminal Ta. Or, a clock pulse CLK having a frequency of 25 MHz or 33 MHz is directly input from oscillator boards 73b or 73c to the input terminal Ta as shown in Fig. 9.

The input terminal Tb is used to determine the frequency (in this example, 25 MHz or 33 MHz) of the clock pulse CLK. The input terminal Tb is set to the grounded level (logic level "L") when setting terminals P1 and P2 are connected together by means of a connection wire L so as to permit a clock pulse CLK of 25 MHz to be input, for example. When the connection wire L is not connected, the potential of the input terminal Ta is set to the Vcc level (logic level "H") so as to permit a clock pulse CLK of 33 MHz to be input, for example.

The memory controller includes signal creating circuits 80 and 81 for creating memory control signals RAS and signal creating circuits 82 and 83 for creating memory control signals CAS. The signal creating circuit 80 creates a memory control signal RAS which is synchronous with the clock pulse CLK of 33 MHz. The signal creating circuit 81 creates a memory control signal RAS which is synchronous with the clock pulse CLK of 25 MHz.

The signal creating circuits 80 and 81 respectively include decoders 80a and 81a, flip-flops 80b and 81b, AND gates 80c and 81c and flip-flops 80d and 81d. The decoders 80a and 81a and flip-flops 80b and 81b are circuits for decoding various timing signals A to F generated from a timing generator 84 and creating and holding a RAS strobe signal RAS-STB. The clock terminals of the flip-flops 80b and 81b are supplied with a clock pulse CLK from the input terminal Ta.

The first input terminal of each of the AND gates 80c and 81c is supplied with a RAS enable signal RAS-EN which is created by a preset circuit of the memory controller and is used as a basic signal of the memory control signal RAS. Each of the AND gates 80c and 81c receives a signal RAS-STB at the second input terminal and receives a setting signal SC for setting the frequency of the clock pulse CLK from the input terminal Tb at the third input terminal.

The flip-flops 80d and 81d are circuits for latching output signals of the AND gates 80c and 81c and receive the clock pulse CLK input from the input terminal Ta at the respective clock input terminals. An OR circuit 85 transfers signals output from the flip-flops 80d and 81d to the system memory as a memory control signal RAS.

Further, the signal creating circuit 82 creates a memory control signal CAS which is synchronous with the clock pulse CLK of 33 MHz. The signal creating circuit 83 creates a memory control signal CAS which is synchronous with the clock pulse CLK of 25 MHz. The signal creating circuits 82 and 83 have the same construction as the signal creating circuits 80 and 81, and the explanation therefor is omitted.

Next, the operation of the third embodiment is explained with respect to the signal creating circuits 80 and 81.

First, as shown in Fig. 9, an MPU 1 operated by the clock pulse CLK of 25 MHz is mounted on the CPU socket 2 of the system board 70. At this time, the clock pulse CLK of 25 MHz is supplied to the MPU 1 based on the clock pulse CKb of 25 MHz generated from the oscillator board 73b. At the same time, the clock pulse CLK of 25 MHz is input to the input terminal TA as shown in Fig. 9.

When the MPU 1 is mounted, the setting terminal P1 is connected to the setting terminal P2 via the connection wire L so as to permit the setting signal SC of logic level "L" to be input from the input terminal Tb. The setting terminals P1 and P2 are previously disposed on the system board 70.

Since the setting signal SC of logic level "L" is input to the third input terminal of the AND gate 80c of the signal creating circuit 80, the signal creating process of the signal creating circuit 80 is set in the inhibited state.

On the other hand, the setting signal SC whose logic level is inverted to the logic level "H" by an inverter 87 is input to the third input terminal of the AND gate 81c of the signal creating circuit 81. Therefore, the AND gate 81c outputs a RAS enable signal RAS-EN which is a basic signal of the memory control signal RAS to the flip-flop 81d according to the RAS strobe signal RAS-STB. The flip-flop 81d outputs the RAS enable signal RAS-EN to the OR gate 85 in synchronism with the clock pulse CLK of 25 MHz. As a result, the OR gate 85 outputs a memory control signal RAS which is synchronous with the clock pulse CLK of 25 MHz.

An MPU 1 operated by the clock pulse CLK of 33 MHz is mounted on the CPU socket 2 of the system board 70. At this time, the clock pulse CLK of 33 MHz is supplied to the MPU 1 based on the clock pulse CKc of 33 MHz generated from the oscillator board 73c. At the same time, the clock pulse CLK of 33 MHz is input to the input terminal TA as shown in Fig. 9.

When the above MPU 1 is mounted, the setting terminal P1 is separated from the setting terminal P2 so as to permit the setting signal SC of logic level "H" to be input from the input terminal Tb. Since the setting signal SC of logic level "H" is input to the third input terminal of the AND gate 80c of the signal creating circuit 80, the signal creating process of the signal creating circuit 80 is set in the permissible state. On the other hand, since the setting signal SC whose logic level is inverted to the logic level "L" by an inverter 87 is input to the third input terminal of the AND gate 81c of the signal creating circuit 81, the signal creating process of the signal creating circuit 81 is set in the inhibited state.

As a result, in the signal creating circuit 80, the AND gate 80c outputs a RAS enable signal RAS-EN which is a basic signal of the memory control signal RAS to the flip-flop 80d according to the RAS strobe signal RAS-STB. The flip-flop 80d outputs the RAS enable signal RAS-EN to the OR gate 85 in synchronism with the clock pulse CLK of 33 MHz. As a result, the OR gate 85 outputs a memory control signal RAS which is synchronous with the clock pulse CLK of 33 MHz.

Thus, in the third embodiment, if different types of MPUs having operation clock pulses of different frequencies are exchanged and when a clock pulse CLK having an adequate frequency is supplied to the mounted MPU, a memory control signal RAS which is synchronous with the clock pulse CLK can be created. A memory control signals CAS which is synchronous with the clock pulse CLK can be created by the signal creating circuits 82 and 83.

Therefore, when an MPU constituting the CPU of the system is mounted, memory control signals RAS and CAS and the like can be created in synchronism with the clock pulse CLK of a preset frequency supplied to the mounted MPU. As a result, a system capable of operating the peripheral circuit of the CPU such as a memory when the MPU is mounted can be easily constructed.

## Claims

1. A computer system comprising:
CPU socket means (2) for permitting a different type of CPU (1) to be selectively and removably mounted thereon;
determining means (5) for determining the type of said CPU (1) mounted on said CPU socket means (2) at the time of turn-ON of a power source of the system and outputting control data corresponding to the type of said CPU (1);
register means (10) for storing the control data corresponding to the type of said CPU (1) determined by said determining means (5); and
control signal switching means (3) for switching control signals necessary for the operation of said CPU (1) based on the control data stored in said register means (10) and supplying the control signals corresponding to the type of said CPU (1) mounted on said CPU socket means to said CPU (1),
characterized in that
said determining means (5) determines the type of said CPU (1) based on initialization data obtained in the initialization process of said CPU (1) mounted on said CPU socket means (2) at the time of initialization of the system.

2. A system according to claim 1, characterized in that said control signal switching means has selector means (9) for selectively supplying input signals set according to the type of said CPU (1) to the same input terminals of said CPU (1) mounted on said CPU socket means (2) based on the control data.

3. A system according to claim 1, characterized in that said determining means (5) determines said CPU (1) mounted on said CPU socket means (2) as a CPU having an additional function when said CPU (1) has output specified initialization and determines said CPU (1) as a standard CPU when said CPU has not output the specified initialization data based on initialization data obtained in the initialization process effected for an additional function of said CPU (1) mounted on said CPU socket means (2) at the time of initialization process of the system.

4. A system according to claim 1, characterized by:
system board means (70) having input connector means (74) mounted thereon for receiving a basic clock pulse of the system from said CPU socket means (2) and the exterior;
clock generator means (73a to 73c) having output connector means (77a to 77c) which is removably connected to said input connector means (74) and oscillator means (76a to 76c) for generating said basic clock pulse of a preset frequency corresponding to the type of said CPU (1), for inputting said basic clock pulse to said input connector means (74) via said output connector means (77a to 77c); and
timing generator means (75) mounted on said system board means (70), for creating a clock pulse of a frequency required for the operation of said CPU (1) mounted on said CPU socket means (2) based on said basic clock pulse input via said input connector means (74) and supplying the same to said CPU (1).

5. A system according to claim 4, characterized in that said clock pulse generator means (73a to 73c) includes a plurality of oscillator board means provided for respective frequencies and having oscillators (76a to 76c) for generating basic clock pulses of different frequencies and said output connector means (77a to 77c) mounted thereon.

6. A system according to claim 4, characterized by further comprising memory control means mounted on said system board means (70), for creating a memory control signal synchronous with the clock pulse which is generated from said timing generator means (75) and supplied to said CPU (1) mounted on said CPU socket means (2).

## Patentansprüche

1. Computersystem mit
einer CPU-Sockeleinrichtung (2), auf der ein verschiedener Typ von CPU (1) selektiv und abnehmbar montiert werden kann,
einer Bestimmungseinrichtung (5) zum Bestimmen des Typs der CPU (1), die auf der CPU-Sockeleinrichtung (2) montiert ist, zum Zeitpunkt des Einschaltens einer Leistungsquelle des Systems und zum Ausgeben von Steuerdaten entsprechend dem Typ der CPU (1),
einer Registereinrichtung (10) zum Speichern der Steuerdaten entsprechend dem Typ der CPU (1), der durch die Bestimmungseinrichtung (5) bestimmt ist, und
einer Steuersignalschalteinrichtung (3) zum Schalten von Steuersignalen, die für den Betrieb der CPU (1) notwendig sind, auf der Basis der in der Registereinrichtung (10) gespeicherten Steuerdaten und zum Anlegen der Steuersignale entsprechend dem Typ der CPU (1), die auf der CPU-Sockeleinrichtung montiert ist, an die CPU (1),
dadurch gekennzeichnet, daß
die Bestimmungseinrichtung (5) den Typ der CPU (1) auf der Basis von Initialisierungsdaten, die in dem Initialisierungsprozeß der auf der CPU-Sockeleinrichtung (2) montierten CPU (1) erhalten sind, zum Zeitpunkt der Initialisierung des Systems bestimmt.

2. System nach Anspruch 1, dadurch gekennzeichnet, daß die Steuersignalschalteinrichtung eine Wählereinrichtung (9) zum selektiven Anlegen von entsprechend dem Typ der CPU (1) festgelegten Eingangssignalen an die gleichen Eingangsanschlüsse der auf der CPU-Sockeleinrichtung (2) montierten CPU (1) auf der Basis der Steuerdaten besitzt.

3. System nach Anspruch 1, dadurch gekennzeichnet, daß die Bestimmungseinrichtung (5) die auf der CPU-Sockeleinrichtung (2) montierte CPU (1) als CPU mit zusätzlicher Funktion bestimmt, wenn die CPU (1) eine spezifische Initialisierung ausgegeben hat, und die CPU (1) als Standard-CPU bestimmt, wenn die CPU die spezifischen Initialisierungsdaten auf der Basis der Initialisierungsdaten, die beim für eine zusätzliche Funktion der auf der CPU-Sockeleinrichtung (2) montierten CPU (1) bewirkten Initialisierungsprozeß zum Zeitpunkt des Initialisierungsprozesses des Systems erhalten sind, nicht ausgegeben hat.

4. System nach Anspruch 1, gekennzeichnet durch
eine Systemplatineneinrichtung (70) mit darauf montierter Eingangsverbindereinrichtung (74) zum Empfangen eines Basistaktpulses des Systems von der CPU-Sockeleinrichtung (2) und von außen,
eine Taktgeneratoreinrichtung (73a bis 73c) mit einer Ausgangsverbindereinrichtung (77a bis 77c), die abnehmbar mit der Eingangsverbindereinrichtung (74) verbunden ist, und einer Oszillatoreinrichtung (76a bis 76c), die den Basistaktpuls einer entsprechend dem Typ der CPU (1) voreingestellten Frequenz erzeugt, zum Eingeben des Basistaktpulses in die Eingangsverbindereinrichtung (74) über die Ausgangsverbindereinrichtung (77a bis 77c), und
eine Zeitsteuergeneratoreinrichtung (75), die auf der Systemplatineneinrichtung (70) montiert ist, zum Erzeugen eines Taktpulses einer für den Betrieb der auf der CPU-Sockeleinrichtung (2) montierten CPU (1) notwendigen Frequenz auf der Basis des über die Eingangsverbindereinrichtung (74) eingegebenen Basistaktpulses und zum Anlegen desselben an die CPU (1).

5. System nach Anspruch 4, dadurch gekennzeichnet, daß die Taktpulsgeneratoreinrichtung (73a bis 73c) mehrere Oszillatorplatineneinrichtungen, die für die entsprechenden Frequenzen vorgesehen sind und Oszillatoren (76a bis 76c) zum Erzeugen von Basistaktpulsen verschiedener Frequenzen besitzen, und die darauf montierten Ausgangsverbindereinrichtungen (77a bis 77c) umfaßt.

6. System nach Anspruch 4, weiterhin gekennzeichnet durch eine auf der Systemplatineneinrichtung (70) montierte Speichersteuereinrichtung zum Erzeugen eines Speichersteuersignals synchron zu dem Taktpuls, der von der Zeitsteuergeneratoreinrichtung (75) erzeugt und an die auf die CPU-Sockeleinrichtung (2) montierte CPU (1) angelegt ist.

## Revendications

1. Système informatique comprenant :
des moyens formant support (2) d'unité centrale pour permettre d'installer un type d'unité centrale (1) différent, de manière sélective et amovible, sur ceux-ci ;
des moyens de détermination (5) destinés à déterminer le type de ladite unité centrale (1) installée sur lesdits moyens formant support (2) d'unité centrale au moment de la mise sous tension d'une source d'alimentation du système et destinés à sortir des données de contrôle correspondant au type de ladite unité centrale (1) ;
des moyens formant registre (10) destinés à stocker les données de contrôle correspondant au type de ladite unité centrale (1) déterminé par lesdits moyens de détermination (5) ; et
des moyens de commutation de signaux de contrôle (3) destinés à commuter les signaux de commande nécessaires au fonctionnement de ladite unité centrale (1) sur la base des données de contrôle stockées dans lesdits moyens formant registre (10) et destinés à fournir les signaux de commande correspondant au type de ladite unité centrale (1) installée sur lesdits moyens formant support d'unité centrale à ladite unité centrale (1),
caractérisé en ce que :
lesdits moyens de détermination (5) déterminent le type de ladite unité centrale (1) sur la base des données d'initialisation obtenues dans l'opération d'initialisation de ladite unité centrale (1) installée sur lesdits moyens formant support (2) d'unité centrale au moment de l'initialisation du système.

2. Système selon la revendication 1, caractérisé en ce que lesdits moyens de commutation de signaux de contrôle comportent des moyens formant sélecteur (9) destinés à fournir, de manière sélective, des signaux d'entrée fixés conformément au type de ladite unité centrale (1) aux mêmes bornes d'entrée de ladite unité centrale (1) installée sur desdits moyens formant support (2) d'unité centrale sur la base des données de contrôle.

3. Système selon la revendication 1, caractérisé en ce que lesdits moyens de détermination (5) déterminent ladite unité centrale (1) installée sur lesdits moyens formant support (2) d'unité centrale comme unité centrale ayant une fonction supplémentaire lorsque ladite unité centrale (1) a sorti l'initialisation spécifiée et déterminent ladite unité centrale (1) comme unité centrale standard lorsque ladite unité centrale n'a pas sorti les données d'initialisation spécifiées, sur la base des données d'initialisation obtenues dans l'opération d'initialisation effectuée pour une fonction supplémentaire de ladite unité centrale (1) installée sur lesdits moyens formant support (2) d'unité centrale au moment de l'opération d'initialisation du système.

4. Système selon la revendication 1, caractérisé par :
des moyens formant carte de système (70) sur lesquels des moyens formant connecteur d'entrée (74) sont installés pour recevoir une impulsion d'horloge de base du système à partir desdits moyens formant support (2) d'unité centrale et de l'extérieur ;
des moyens formant générateur d'horloge (73a à 73c) comportant des moyens formant connecteur de sortie (77a à 77c) qui sont connectés, de manière amovible, auxdits moyens formant connecteur d'entrée (74) et desdits moyens formant oscillateur (76a à 76c) pour générer ladite impulsion d'horloge de base d'une fréquence présélectionnée correspondant au type de ladite unité centrale (1), pour entrer ladite impulsion d'horloge de base vers lesdits moyens formant connecteur d'entrée (74) via lesdits moyens formant connecteur de sortie (77a à 77c) ; et
des moyens formant générateur de synchronisation (75) installés sur lesdits moyens formant carte de système (70), pour créer une impulsion d'horloge d'une fréquence nécessaire au fonctionnement de ladite unité centrale (1) installée sur ledit support (2) d'unité centrale sur la base de ladite impulsion d'horloge de base entrée via lesdits moyens formant connecteur d'entrée (74) et pour fournir la susdite à ladite unité centrale (1).

5. Système selon la revendication 4, caractérisé en ce que lesdits moyens formant générateur d'impulsions d'horloge (73a à 73c) comprennent une pluralité de moyens formant carte d'oscillateur prévus pour des fréquences respectives et comportant des oscillateurs (76a à 76c) destinés à générer des impulsions d'horloge de base de fréquences différentes et sur lesquels lesdits moyens formant connecteur de sortie (77a à 77c) sont installés.

6. Système selon la revendication 4, caractérisé en ce qu'il comprend, de plus, des moyens de contrôle de mémoire installés sur ladite carte de système (70), destinés à créer un signal de contrôle de mémoire synchrone avec l'impulsion d'horloge qui est générée à partir desdits moyens formant générateur de synchronisation (75) et fournie à ladite unité centrale (1) installée sur lesdits moyens formant support (2) d'unité centrale.
